# EUROPÄISCHE PATENTSCHRIFT

(11) **EP 2 759 756 B1**
(45) Veröffentlichungstag und Bekanntmachung des Hinweises auf die Patenterteilung: **23.03.2016**
(21) Anmeldenummer: 13197252.3
(22) Anmeldetag: 13.12.2013
(51) Int. Cl.: F16L 37/098

(54) **Anordnung zur Verbindung von Abschnitten einer Leitung**
Assembly for the connection of sections of a conduit
Dispositif de raccordement de sections d'une conduite

(30) Priorität: 28.01.2013 DE 202013100390 U
(43) Veröffentlichungstag der Anmeldung: 30.07.2014
(73) Patentinhaber: Schieffer GmbH & Co Kommanditgesellschaft, 59557 Lippstadt (DE)
(72) Erfinder: Lanhenke, Stephan, 59597 Erwitte (DE)
(74) Vertreter: Kalkoff & Partner

(56) Entgegenhaltungen:
- WO-A1-2011/108728
- DE-A1- 10 321 309
- DE-U1-202010 007 069
- US-A1- 2010 032 943

## Beschreibung

Die vorliegende Erfindung betrifft eine Anordnung zur Verbindung von Abschnitten einer Leitung mit einem Rohrabschnitt und einem Anschlussmittel, welches mit dem Rohrabschnitt lösbar verbunden ist und welches mit einem Ende eines Schlauches fest verbunden ist, wobei der Rohrabschnitt einen Kragen und einen Rohrmantel umfasst, wobei der Kragen über den Rohrmantel radial nach außen vorsteht, wobei der Rohrmantel aus einem Teil besteht, wobei der Kragen mit einem Abstand zu einem Ende des Rohrmantels auf dem Rohrmantel angeordnet ist und wobei das Ende des Rohrmantels und ein sich vom Ende des Rohrmantels bis zum Kragen erstreckender Abschnitt des Rohrmantels in das Anschlussmittel eingeschoben ist.

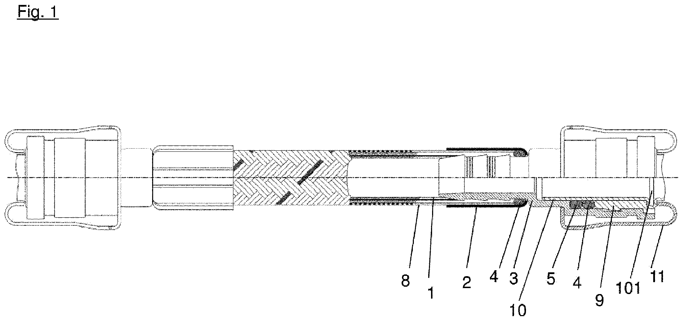

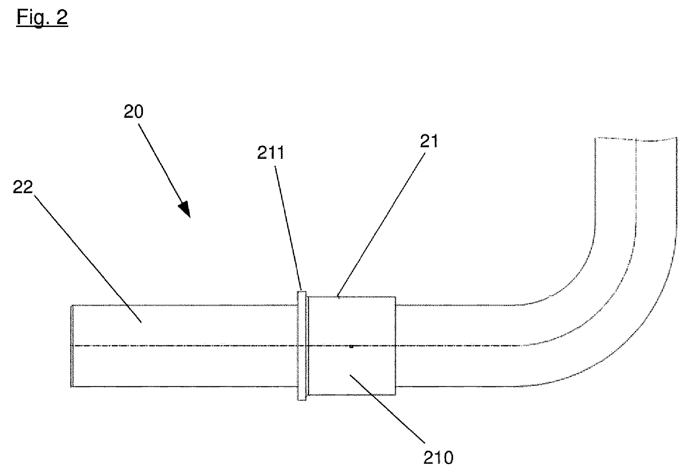

Aus dem Dokument WO 2011/080717 A2 ist eine derartige Anordnung bekannt. Auch im Dokument DE 20 2010 007 069 U1 ist eine derartige Anordnung offenbart. Die in der Fig. 2 des letzteren Dokuments gezeigte Anordnung dient der lösbaren Verbindung eines Rohres und eines Schlauches. Die in der Fig. 2 des Dokumentes DE 20 2010 007 069 U1 beschriebene Anordnung ist vorliegend als Fig. 1 wiedergegeben. Diese zeigt das Anschlussmittel 3, 4, 5, 9, 11, das mit einem Ende des Schlauches 1, 8 fest verbunden ist. Ferner ist das Anschlussmittel 3, 4, 5, 9, 11 zur Verbindung mit dem Rohr 10 über einen endseitigen Rohrabschnitt geschoben und nimmt diesen Rohrabschnitt auf. An dem Rohrabschnitt ist ein Kragen 101 vorgesehen. Dieser Kragen 101 wird von einer Klammer 11 des Anschlussmittels 3, 4, 5, 9, 11 hintergriffen, so dass das Anschlussmittel 3, 4, 5, 9, 11 nicht ohne ein Lösen der Klammer 11 von dem Rohrabschnitt 10 abgezogen werden kann, um die Verbindung zwischen dem Rohrabschnitt 10 und dem Anschlussmittel 3, 4, 5, 9, 11 bzw. zwischen dem Rohr 10 und dem Schlauch 1, 8 zu lösen.

Der Kragen 101 des Rohrabschnitts 10 ist in einem Stück mit einem Rohrmantel 102 hergestellt. Ein übliches Verfahren zum Herstellen eines Rohrabschnitts mit einem geeigneten Kragen ist es, einen Rohrabschnitt zu stauchen, so dass sich in einem kleinen Teil des Rohres die Wand des Rohres aufwölben und als Kragen nach außen aufstellen kann.

In der Praxis wird der Rohrabschnitt häufig erst am Einbauort des Rohres mit dem Kragen versehen, da oft erst nach einem Einbau des Rohres die Form und Länge des Rohres feststeht. Das gilt umso mehr, wenn das Rohr am Einbauort nicht als gerades Rohr verlegt ist sonder Bögen, Krümmungen oder sogar Mäander aufweist. Oft wird ein so gebogenes Rohr erst nach dem Herstellen der Form auf die gewünschte Länge gebracht. Das bedeutet aber, dass die Stauchung zum Herstellen des Kragens erst nach dem Formen und Ablängen des Rohres am Einbauort erfolgen kann.

Das Ablängen und Stauchen des Rohrabschnittes am Einbauort ist umständlich und je nach Einbauort möglicherweise auch unmöglich. Es besteht daher der Bedarf nach einer Möglichkeit, ein Rohr erst an einem Einbauort für eine Verbindung mit dem Anschlussmittel vorzubereiten.

Aus dem Dokument DE 103 21 309 A1 ist eine Anordnung zur Verbindung einer "flexiblen Kanüle", also einer flexiblen Injektionsnadel mit einem Rohr bekannt. Die "flexible Kanüle" weist ein Anschlussmittel auf, dass mit einem Abschnitt des Rohres verbunden werden kann. Das Rohr weist einen Rohrmantel, eine Olive und einen Rastring auf, die drei miteinander verbundene Teile sind. Die Olive ist zur Befestigung in ein Ende des Rohrmantels eingeschoben und ragt aus dem Rohrmantel heraus. Das herausragende Ende der Olive ist in die "flexible Kanüle eingeschoben". Der Rastring ist am Ende des Rohrmantels auf dem Rohrmantel befestigt und kragt wie ein Kragen aus.

In dem Dokument DE 103 21 309 A1 ist offenbart, dass die Länge der "flexiblen Kanüle" angepasst werden kann. Die Kanüle kann dazu gekürzt werden. Eine Längenanpassung des Rohres, das mit der Kanüle verbunden ist, ist in dem Dokument nicht beschrieben. Zu einer Kürzung des Rohres besteht auch keine Notwendigkeit, da das Dokument DE 103 21 309 A1 für die Längenanpassung ein Kürzen der "flexiblen Kanüle" vorschlägt. Es bietet daher einem Fachmann keine Anregung zur Lösung des Problems, ein Rohr erst am Einbauort nach einem Ablängen für eine Verbindung mit dem Anschlussmittel vorzubereiten.

Diese Aufgabe wird erfindungsgemäß durch eine Anordnung gemäß dem Anspruch 1 gelöst, bei der der Kragen und der Rohrmantel zwei miteinander verbundene Teile sind. Dadurch, dass der Kragen und der Rohrmantel zwei miteinander verbundene Teile sind, ist es möglich, auf einfache Art und Weise einen Rohrabschnitt mit einem Kragen herzustellen. Nach dem Ablängen des Rohrabschnittes bzw. des Rohrmantels muss der Kragen lediglich an dem Rohrmantel befestigt werden. Das kann auf verschiedene Art und Weise erfolgen, zum Beispiel durch Kleben, Schweißen, Lösten, Pressen, Formschluss usw. Im Gegensatz zu einer Anordnung, wie sie aus dem Dokument DE 103 21 309 A1 bekannt ist, ist es nicht notwendig, dass das Rohr eine Olive aufweist.

Der Kragen kann einen Hülsenabschnitt mit einem inneren freien Querschnitt aufweisen, der dem äußeren Querschnitt des Rohrmantels entspricht. Der Hülsenabschnitt ist damit geeignet, auf den Rohrmantel aufgeschoben zu werden. Das ist insbesondere möglich, wenn der innere freie Querschnitt des Hülsenabschnitts und der äußere Querschnitt des Rohrmantels deckungsgleich sind. Vorzugsweise hat der Hülsenabschnitt ein leichtes Übermaß gegenüber dem Rohrmantel, so dass das Aufschieben des Kragens ohne Weiteres möglich ist.

Der Kragen weist vorteilhaft einen Kragenabschnitt auf, der von dem Hülsenabschnitt nach außen auskragt. Der Kragenabschnitt kann auf verschiedene Art und Weise hergestellt werden.

Vorzugsweise kann zunächst ein Rohr genommen und an einem Ende gestaucht werden, so dass durch das Stauchen der Kragenabschnitt entsteht. Der übrige Teil des Rohres bildet den Hülsenabschnitt. Der Kragenabschnitt ist dann an einem Ende des Kragens einseitig angrenzend an den Hülsenabschnitt vorgesehen.

Ebenso ist es möglich, dass ein mittlerer Abschnitt eines Rohres gestaucht wird, so dass in der Mitte des Rohres ein Kragenabschnitt entsteht. Der Kragenabschnitt ist dann in einer Mitte des Kragens zweiseitig angrenzend an die Hülsenabschnitte vorgesehen.

Das Anschlussmittel kann zumindest ein Halteelement aufweisen, welches zur Verbindung des Rohrabschnittes und des Anschlussmittels lösbar mit dem Rohrabschnitt verbunden ist.

Das Halteelement zur Verbindung des Rohrabschnitts und des Anschlussmittels kann über den Hülsenabschnitt oder den Rohrabschnitt geschoben sein und an dem Kragenabschnitt anliegen. Zum Lösen der Verbindung kann das Halteelement vom Hülsenabschnitt oder vom Rohrabschnitt heruntergeschoben werden.

Das Halteelement kann eine Klammer sein, welche den Hülsenabschnitt oder den Rohrabschnitt umgreift.

Weitere Merkmale und Vorteile der vorliegenden Erfindung werden deutlich anhand der nachfolgenden Beschreibung eines Rohrabschnittes einer erfindungsgemäßen Anordnung. Es zeigt
- Fig. 2: einen Rohrabschnitt der erfindungsgemäßen Anordnung.

Der in Fig. 2 dargestellte Rohrabschnitt 20 einer erfindungsgemäßen Anordnung bildet das Ende eines im weiteren Verlauf nicht dargestellten mäanderförmig gebogenen Rohrs. Auf das Rohr mit dem Rohmantel 22 ist ein Kragen 21 bestehend aus einem Hülsenabschnitt 210 und einem Kragenabschnitt 211 aufgeschoben und durch Pressen mit dem Rohrmantel 22 form- und reibschlüssig verbunden.

Der Rohrabschnitt 20 kann anstelle des in der Figur 1 dargestellten Rohrabschnitts in das Anschlussmittel 3, 4, 5, 9, 11 gemäß Fig. 1 eingeschoben werden und mit dem Anschlussmittel 3, 4, 5, 9, 11 verbunden werden, um dann eine erfindungsgemäße Anordnung zu bilden.

## Patentansprüche

1. Anordnung zur Verbindung von Abschnitten einer Leitung, mit einem Rohrabschnitt (20) und einem Anschlussmittel (3, 4, 5, 9, 11), welches mit dem Rohrabschnitt (20) lösbar verbunden ist und welches mit einem Ende eines Schlauches (1, 8) fest verbunden ist, wobei der Rohrabschnitt (20) einen Kragen (21) und einen Rohrmantel (22) umfasst, wobei der Kragen (21) über den Rohrmantel (22) radial nach außen vorsteht, wobei der Rohrmantel (22) aus einem Teil besteht, wobei der Kragen (21) mit einem Abstand zu einem Ende des Rohrmantels (22) auf dem Rohrmantel (22) angeordnet ist und wobei das Ende des Rohrmantels und ein sich vom Ende des Rohrmantels bis zum Kragen erstreckender Abschnitt des Rohrmantels in das Anschlussmittel eingeschoben ist,
**dadurch gekennzeichnet,**
**dass** der Kragen (21) und der Rohrmantel (22) zwei miteinander verbundene Teile sind.

2. Anordnung nach Anspruch 1, **dadurch gekennzeichnet, dass** der Kragen (21) einen Hülsenabschnitt (210) mit einem inneren freien Querschnitt aufweist, der dem äußeren Querschnitt des Rohrmantels (22) entspricht.

3. Anordnung nach Anspruch 2, **dadurch gekennzeichnet, dass** der äußere Querschnitt des Rohrmantels (22) zumindest vom Ende des Rohrmantels (22) bis zum Kragen gleichförmig ist.

4. Anordnung nach einem der Ansprüche 2 oder 3, **dadurch gekennzeichnet, dass** der Kragen (21) einen Kragenabschnitt (211) aufweist, der über den Hülsenabschnitt (210) nach außen auskragt.

5. Anordnung nach Anspruch 4, **dadurch gekennzeichnet, dass** der Kragenabschnitt (211) an einem Ende des Kragens (21) einseitig angrenzend an den Hülsenabschnitt (210) vorgesehen ist.

6. Anordnung nach Anspruch 4, **dadurch gekennzeichnet, dass** der Kragenabschnitt (211) in einer Mitte des Kragens (21) zweiseitig angrenzend an zwei Hülsenabschnitte (210) vorgesehen ist.

7. Anordnung nach einem der Ansprüche 1 bis 6, **dadurch gekennzeichnet, dass** der Kragen (21) und der Rohrmantel (22) durch Pressen form- und reibschlüssig oder durch Punktschweißen miteinander verbunden sind.

8. Anordnung nach einem der Ansprüche 1 bis 7, **dadurch gekennzeichnet, dass** das Anschlussmittel zumindest ein Halteelement (11) aufweist, welches zur Verbindung des Rohrabschnitts (20) und des Anschlussmittels (3, 4, 5, 9, 11) lösbar mit dem Rohrabschnitt (20) verbunden ist.

9. Anordnung nach Anspruch 8, **dadurch gekennzeichnet, dass** das Halteelement (11) zur Verbindung des Rohrabschnitts (20) und des Anschlussmittels (3, 4, 5, 9, 11) über den zwischen dem Ende des Rohrabschnitts (20) und dem Kragen (21) liegenden Bereich des Rohrabschnitts (20)geschoben ist und an dem Kragenabschnitt (211) anliegt.

10. Anordnung nach Anspruch 9, **dadurch gekennzeichnet, dass** das Halteelement (11) eine Klammer ist, welche den Hülsenabschnitt (210) oder den Rohrabschnitt (20) umgreift.

11. Anordnung nach einem der Ansprüche 1 bis 10, **dadurch gekennzeichnet, dass** der Rohrabschnitt das Ende eines im weiteren Verlauf mäanderförmig gebogenen Rohres bildet.

12. Verfahren zum Herstellen einer Anordnung nach einem der Ansprüche 1 bis 11, **dadurch gekennzeichnet,**
- **dass** ein Rohrmantel abgelängt wird,
- **dass** der Kragen (21) auf den Rohrmantel (22) geschoben wird,
- **dass** der Kragen (21) durch Pressen oder Punktschweißen mit dem Rohrmantel (22) zu dem Rohrabschnitt (20) verbunden wird und
- **dass** der Rohrabschnitt (20) mit ein Anschlussmittel (3, 4, 5, 9, 11) eingeschoben und mit dem Anschlussmittel (3, 4, 5, 9, 11) verbunden wird.

13. Verfahren nach Anspruch 12, **dadurch gekennzeichnet, dass** vor dem Ablängen des Rohrmantels der Rohrmantel mit Bögen, Krümmungen oder Mäandern versehen wird.

14. Verfahren nach Anspruch 12 oder 13, **dadurch gekennzeichnet, dass** der Rohrmantel vor dem Ablängen verlegt wird.

## Claims

1. An assembly for the connection of sections of a conduit, with a tube section (20) and a connection means (3, 4, 5, 9, 11), which is releasably connected with the tube section (20) and which is permanently connected with one end of a hose (1, 8), wherein the tube section (20) comprises a collar (21) and a tube casing (22), wherein the collar (21) protrudes outwards radially over the tube casing (22), wherein the tube casing (22) is made of one part, wherein the collar (21) is arranged on the tube casing (22) at a distance from one end of the tube casing (22) and wherein the end of the tube casing and a section of the tube casing extending from the end of the tube casing up to the collar is pushed into the connection means,
**characterized in that**
the collar (21) and the tube casing (22) are two interconnected parts.

2. The assembly according to claim 1, **characterized in that** the collar (21) has a sleeve section (210) with an inner free cross-section, which corresponds with the outer cross-section of the tube casing (22).

3. The assembly according to claim 2, **characterized in that** the outer cross-section of the tube casing (22) is uniform at least from the end of the tube casing (22) up to the collar.

4. The assembly according to one of claims 2 or 3, **characterized in that** the collar (21) has a collar section (211), which protrudes outwards over the sleeve section (210).

5. The assembly according to claim 4, **characterized in that** the collar section (211) on one end of the collar (21) is provided adjacent to the sleeve section (210) on one side.

6. The assembly according to claim 4, **characterized in that** the collar section (211) in a center of the collar (21) is provided adjacent to two sleeve sections (210) on two sides.

7. The assembly according to one of claims 1 to 6, **characterized in that** the collar (21) and the tube casing (22) are interconnected through pressing in a form-fitting and frictional manner or through spot-welding.

8. The assembly according to one of claims 1 to 7, **characterized in that** the connection means has at least one holding element (11), which is releasably connected with the tube section (20) for connecting the tube section (20) and the connection means (3, 4, 5, 9, 11).

9. The assembly according to claim 8, **characterized in that** the holding element (11) is pushed over the area of the tube section (20) lying between the end of the tube section (20) and the collar (21) for connecting the tube section (20) and the connection means (3, 4, 5, 9, 11) and is in contact with the collar section (211).

10. The assembly according to claim 9, **characterized in that** the holding element (11) is a clamp, which engages around the sleeve section (210) or the tube section (20).

11. The assembly according to one of claims 1 to 10, **characterized in that** the tube section forms the end of a tube bent in a meandering manner as it progresses further.

12. A method for producing an assembly according to one of the claims 1 to 11, **characterized in that**
- a tube casing is cut to length,
- the collar (21) is pushed onto the tube casing (22),
- the collar (21) is connected with the tube casing (22) for forming the tube section (20) through pressing or spot-welding and
- the tube section (20) is pushed in with a connection means (3, 4, 5, 9, 11) and is connected with the connection means (3, 4, 5, 9, 11).

13. The method according to claim 12, **characterized in that** the tube casing is provided with bends, curves or meanders before being cut to length.

14. The method according to claim 12 or 13, **characterized in that** the tube casing is installed before being cut to length.

## Revendications

1. Dispositif de raccordement de sections d'une conduite, avec une section tubulaire (20) et un moyen de raccordement (3, 4, 5, 9, 11) relié de manière détachable à la section tubulaire (20) et relié de manière fixe à une extrémité d'un tuyau (1, 8), dans lequel la section tubulaire (20) comprend un collet (21) et une enveloppe tubulaire (22), dans lequel le collet (21) fait saillie radialement vers l'extérieur au-dessus de l'enveloppe tubulaire (22), dans lequel l'enveloppe tubulaire (22) se compose d'une pièce, dans lequel le collet (21) est disposé à une distance d'une extrémité de l'enveloppe tubulaire (22) sur l'enveloppe tubulaire (22) et dans lequel l'extrémité de l'enveloppe tubulaire et une section de l'enveloppe tubulaire s'étendant de l'extrémité de l'enveloppe tubulaire jusqu'au collet est poussée dans le moyen de raccordement,
**caractérisé**
**en ce que** le collet (21) et l'enveloppe tubulaire (22) sont deux pièces raccordées l'une avec l'autre.

2. Dispositif selon la revendication 1, **caractérisé en ce que** le collet (21) comporte une section de douille (210) avec une coupe transversale libre intérieure correspondant à la coupe transversale extérieure de l'enveloppe tubulaire (22).

3. Dispositif selon la revendication 2, **caractérisé en ce que** la coupe transversale extérieure de l'enveloppe tubulaire (22) est uniforme au moins de l'extrémité de l'enveloppe tubulaire (22) jusqu'au collet.

4. Dispositif selon l'une quelconque des revendications 2 ou 3, **caractérisé en ce que** le collet (21) comporte une section de collet (211) qui déborde vers l'extérieur au-dessus de la section de douille (210).

5. Dispositif selon la revendication 4, **caractérisé en ce que** la section de collet (211) est prévue être à une extrémité du collet (21) adjacente sur un seul côté à la section de douille (210).

6. Dispositif selon la revendication 4, **caractérisé en ce que** la section de collet (211) est prévue être à un centre du collet (21) adjacente sur les deux côtés à deux sections de douille (210).

7. Dispositif selon l'une quelconque des revendications 1 à 6, **caractérisé en ce que** le collet (21) et l'enveloppe tubulaire (22) sont reliés l'un à l'autre par pressage par engagement positif et par friction ou par soudage par points.

8. Dispositif selon l'une quelconque des revendications 1 à 7, **caractérisé en ce que** le moyen de raccordement comporte au moins un élément de retenue (11) relié de manière détachable à la section tubulaire (20) en vue du raccordement de la section tubulaire (20) et du moyen de raccordement (3, 4, 5, 9, 11).

9. Dispositif selon la revendication 8, **caractérisé en ce que** l'élément de retenue (11) pour raccordement de la section tubulaire (20) et du moyen de raccordement (3, 4, 5, 9, 11) est embroché sur la zone de la section tubulaire (20) située entre l'extrémité de la section tubulaire (20) et le collet (21) et est en contact avec la section de collet (211).

10. Dispositif selon la revendication 9, **caractérisé en ce que** l'élément de retenue (11) est une bride de fixation enveloppant la section de douille (210) ou la section tubulaire (20).

11. Dispositif selon l'une quelconque des revendications 1 à 10, **caractérisé en ce que** la section tubulaire forme l'extrémité d'un tube courbé en méandres dans le cours ultérieur.

12. Procédé de fabrication d'un dispositif selon l'une quelconque des revendications 1 à 11, **caractérisé**
- **en ce qu'**une enveloppe tubulaire est tronçonnée,
- **en ce que** le collet (21) est embroché sur l'enveloppe tubulaire (22),
- **en ce que** le collet (21) est relié par pressage ou soudage par points à l'enveloppe tubulaire (22) pour former la section tubulaire (20) et
- **en ce que** la section tubulaire (20) est embrochée avec un moyen de raccordement (3, 4, 5, 9, 11) et reliée au moyen de raccordement (3, 4, 5, 9, 11).

13. Procédé selon la revendication 12, **caractérisé en ce que**, avant le tronçonnage de l'enveloppe tubulaire, l'enveloppe tubulaire est dotée d'arcs, de courbures ou de méandres.

14. Procédé selon la revendication 12 ou 13, **caractérisé en ce que** l'enveloppe tubulaire est posée avant le tronçonnage.
